# EUROPEAN PATENT APPLICATION

(11) **EP 2 181 813 A1**
(43) Date of publication of application: **05.05.2010**
(21) Application number: 09173318.8
(22) Date of filing: 16.10.2009
(51) Int. Cl.: B25G 1/10, A63C 11/22, B62K 21/26

(54) **Ergonomic handle**

(30) Priority: 28.10.2008 IT MI20080357 U
(71) Applicant: SELLE ITALIA S.r.l., 31010 Casella D'Asolo (TREVISO) (IT)
(72) Inventor: Bigolin, Riccardo, 31011 Casella D'Asolo (IT)
(74) Representative: Cicogna, Franco

(57) **Abstract**

An ergonomic handle comprises a handle central body coupled with a shaped portion extending from the central body to the rear of the handle with reference to a running direction, the shaped portion defining a top bearing surface thereon a hand of a user can bear and a bottom handle surface to be gripped by the user fingers, said handle further comprising ventilating means for allowing air to circulate therethrough.

## Description

### BACKGROUND OF THE INVENTION

The present invention relates to an ergonomic handle.

Handles of different constructions are used in several application fields, such as sports and working fields, to facilitate a gripping of an instrument, tool or control device to be gripped by the hands.

In particular, handles are universally used on vehicles including handlebars such as bicycles, motorcycles, snowmobiles, watermobiles, and other sports and working implements such as barrows, shovels, and in all implements including a handle.

Several types of handles are moreover used in sports and training implements, such as ski sticks, trekking sticks, handlebars for palestra training machines, and so on.

Handles are furthermore used in working implements and instruments, which must be gripped for a long time, and for providing comparatively high efforts.

For example, in the bicycle field, the handles applied at the end portions of the bicycle handlebar, facilitate a user hands in gripping the handlebar.

In racing, road and track bicycles, said handles are usually replaced by a fabric or cork material band, but, in all the other cases, they comprises substantially cylindric elements made of a rubber material having any desired hardness.

In some cases, said handles are so shaped or contoured as to provide the user with an improved gripping.

In agonistic and competitive sports applications, a bicycle handlebar is conventionally made in such a manner that a comparatively large portion of the cyclist weight is transmitted to the cyclist hands.

In an agonistic prolonged use of a bicycle, this causes the cyclist hands to be fatigued, since conventional handles do not afford a good distribution of the user weight on the user hands.

Another problem is the perspiration of the cyclist hands which continuously contact the handlebar handles.

For solving the above problem, perspirating or sponge materials have been used in the prior art, but with poor results, because of the fact that, in each case, a bicycle handlebar handle is associated with a perfectly impermeable element constituted by the handlebar tube or by an implement handle.

Moreover, the fatigue and perspiration due to a long use may cause a reduction of the user capability of proper controlling the vehicle.

Thus, it is very important, both from a comfort and a safety standpoint, to improve the present handle constructions.

Like problems and requirements are encountered in all prior handle types, in particular in those which are mounted on implements and tools for sports and working applications.

### SUMMARY OF THE INVENTION

Accordingly, the aim of the present invention is to provide such a handle which is ergonomically improved with respect to prior like-use handles.

Within the scope of the above mentioned aim, a main object of the invention is to provide such a handle adapted to greatly reduce the fatigue of a user hand in a prolonged use of an implement, instrument or vehicle.

Another object of the present invention is to provide such a handle affording an optimum perspiration, thereby reducing negative effects of such a perspiration.

Yet another important object of the present invention is to provide such an ergonomic handle which can be used in a broad range of tools, implements and control elements in general.

Yet another object of the present invention is to provide such a handle construction which, owing to its specifically designed structural features, is very reliable and safe in operation.

According to one aspect of the present invention, the above mentioned aim and objects, as well as yet other objects, which will become more apparent hereinafter, are achieved by an ergonomic handle, **characterized in that** said ergonomic handle comprises a central body meeting with a shaped portion extending, starting from said central body, to a rear portion of said handle, with reference to an advancing direction.

Said shaped portion defines a top bearing surface, thereon a user hand can bear, and a bottom surface providing a user finger gripping means, said handle comprising moreover ventilating means providing an air circulation through said handle.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

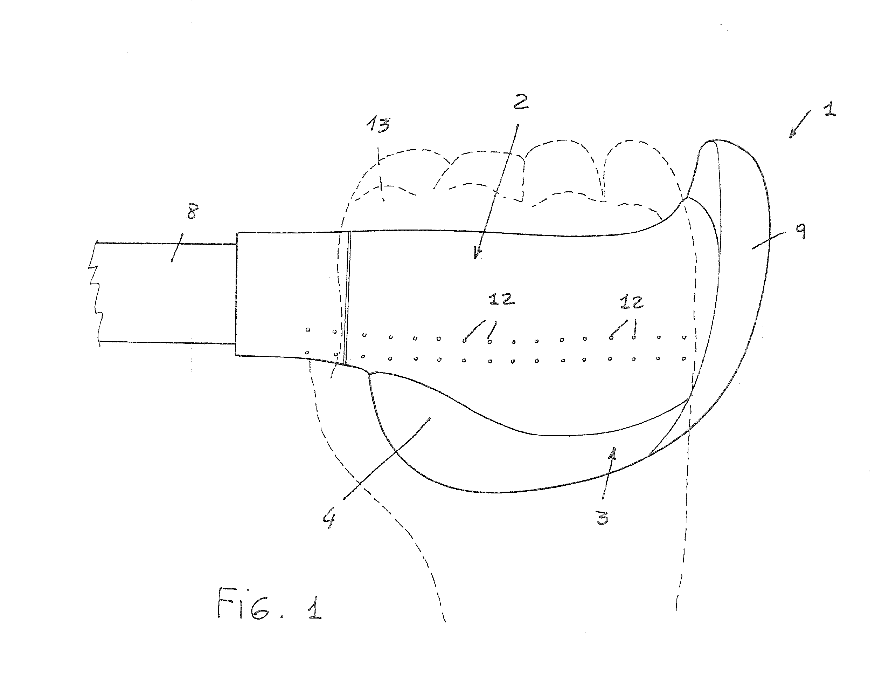

Figure 1 is a top plan view of the handle according to the present invention;

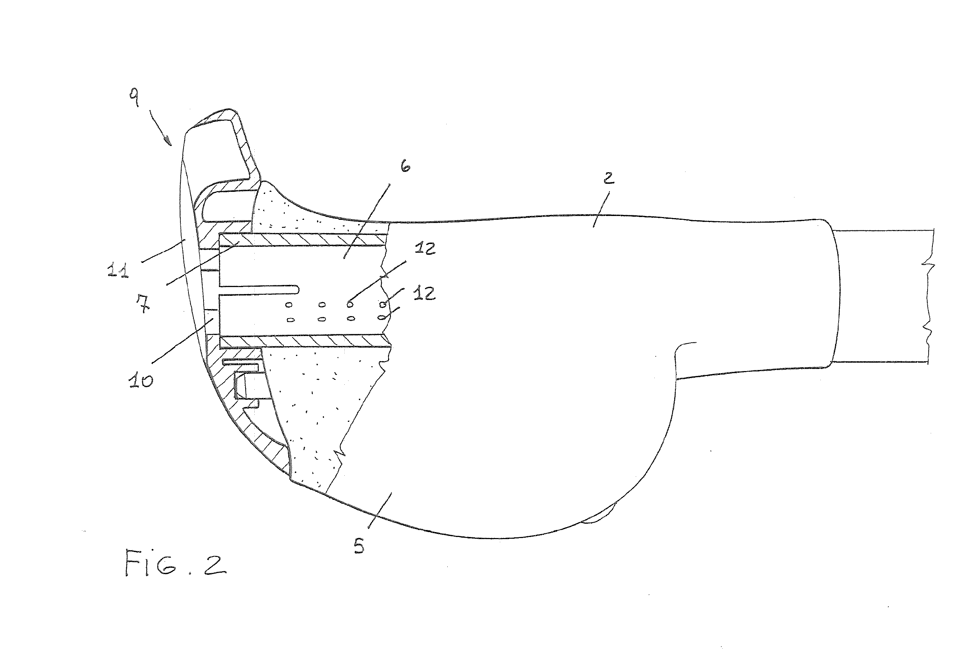

Figure 2 is a partially cross-sectioned bottom view of the handle according to the invention;

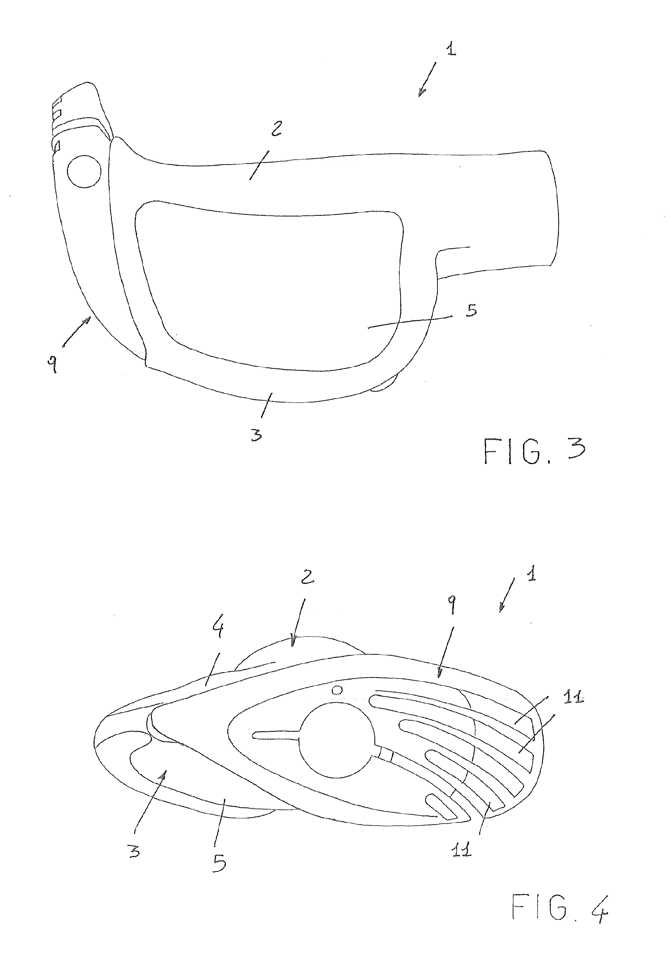

Figure 3 is a further bottom view of the handle according to the invention;
Figure 4 is an outer side view of the handle according to the invention;

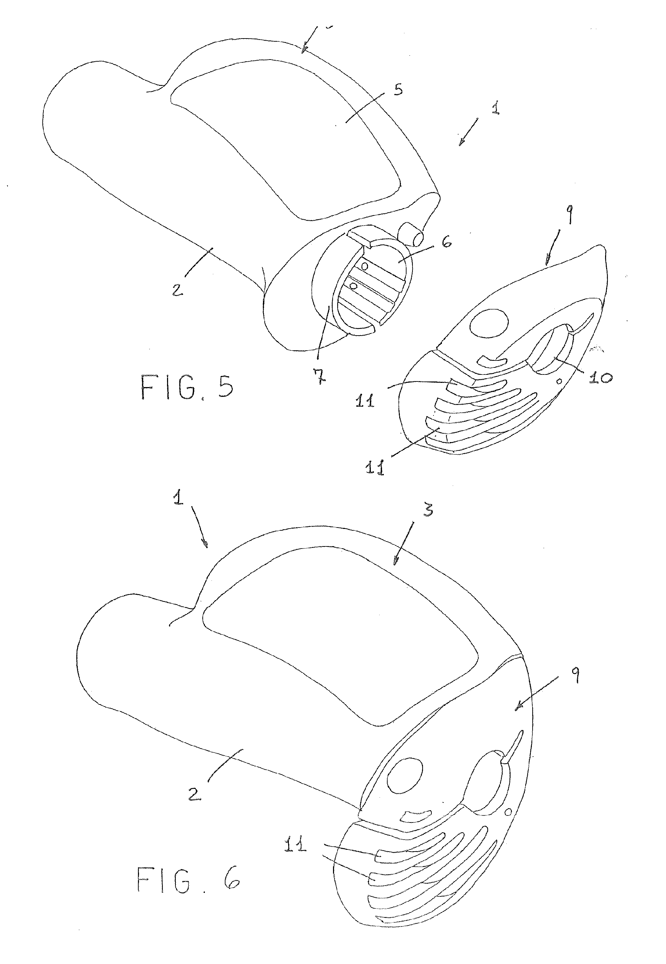

Figure 5 is a bottom perspective view, in a partially exploded form, of the handle according to the invention; and
Figure 6 is a further perspective view of the handle according to the invention.

### DESCRIPTION OF THE PREFERRED EMBODIMENTS

With reference to the number references of the above mentioned figures, the handle according to the invention, which has been generally indicated by the reference number 1, comprises a central body 2, meeting with a shaped or contoured portion 3, which extends, starting from the central body 2, to the rear of the handle, with reference to the advancing or running direction.

It should be apparent that the figures show a right handle.

The shaped or contoured portion 3 defines a top bearing surface 4, thereon a user hand can bear, and a bottom surface 5, defining a user finger gripping means.

Said central body 2 comprises a cavity 6, defined by a tubular element extending longitudinally within said central body and ending with a collar 7 at the outer end portion of the handle, that is at the handle end portion opposite to the handle portion associated or coupled to the handlebar 8.

Said collar 7 provides an engagement means for a terminal or end shaped element 9 which, in an assembled condition, is coupled to the central body 2 and contoured portion 3.

The end shaped element 9 comprises an opening 10 communicating with a plurality of channels 11 designed for conveying an air flow toward said opening 10.

Said opening 10 communicates moreover with the cavity 6 of the handle, which cavity comprises a plurality of aerating holes 12 opening on the top portion of the central body 2.

Thus, the air flow, generated by the movement of the vehicle, will be conveyed through the channels 11 and opening 10 to the cavity 6 in the central body 2, and will exit from the aerating holes 12, thereby properly refreshing or cooling the user hand 13.

It has been found that the invention fully achieves the intended aim and objects.

In fact, the invention provides an ergonomic handle which may be applied to a very broad range of instruments, implements and control members in general, which handle is adapted to greatly reduce the user hand fatigue and perspiration negative effects.

The handle according to the present invention has also the great advantage that it improves the vehicle, instrument or implement control, since it provides an improved gripping and greatly reduce the user fatigue and perspiration.

In practicing the invention, the used materials, as well as the contingent size and shapes, can be any, according to requirements.

## Claims

1. An ergonomic handle, **characterized in that** said ergonomic handle comprises a central body coupled to a shaped portion extending, from said central body, to a rear of the handle, with reference to an advancing direction, said shaped portion defining a top bearing surface thereon a user hand can bear and a bottom surface providing a user finger gripping means, said handle comprising moreover ventilating means for allowing circulating air to pass therethrough.

2. An ergonomic handle, according to claim 1, **characterized in that** said ventilating means comprise an air inlet, allowing an air flow to enter said handle, and a plurality of openings communicating an inside of said handle with an outer surface thereon the user hand bears, so as to diffuse the air flow on the user hand.

3. An ergonomic handle, according to claim 1, **characterized in that** said central body comprises a cavity defined by a tubular element longitudinally extending in said central body and ending with a collar element at an outer end portion of said handle, that is at an end portion of said handle opposite to the handle end portion coupled to a handlebar.

4. An ergonomic handle, according to claim 1, **characterized in that** said collar element provides an engagement means for an end contoured element which, in an assembled condition of said handle, is coupled to said central body and shaped portion.

5. An ergonomic handle, according to claim 1, **characterized in that** said end shaped element comprises at least an opening coupling with a plurality of channels for conveying therethrough an air flow toward said opening.

6. An ergonomic handle, according to claim 1, **characterized in that** said opening communicates with said cavity of said handle, said cavity including a plurality of throughgoing holes opening on the top portion of the central body.

7. An ergonomic handle, according to claim 1, **characterized in that** an air flow generated by a vehicle movement is conveyed through said channels and opening into said cavity in said central body and exits said aerating holes thereby refreshing the user hand.
